# EUROPÄISCHE PATENTSCHRIFT

(11) **EP 0 877 650 B1**
(45) Veröffentlichungstag und Bekanntmachung des Hinweises auf die Patenterteilung: **20.10.1999**
(21) Anmeldenummer: 96946085.6
(22) Anmeldetag: 12.12.1996
(51) Int. Cl.: B01J 13/14

(54) **MIKROPARTIKEL, ENTHALTEND EINEN WIRKSTOFF UND EIN POLYMERES KAPSELWANDMATERIAL, EIN VERFAHREN ZU DEREN HERSTELLUNG UND DEREN VERWENDUNG**
MICROPARTICLES CONTAINING AN ACTIVE SUBSTANCE AND COVERED WITH POLYMERIC CAPSULE-WALL MATERIAL, METHOD OF PRODUCING SUCH PARTICLES AND THEIR USE
MICROPARTICULES CONTENANT UNE SUBSTANCE ACTIVE ET UN MATERIAU POLYMERE FORMANT LA PAROI D'UNE CAPSULE, LEUR PROCEDE DE FABRICATION ET LEUR UTILISATION

(30) Priorität: 31.01.1996 DE 19603453
(43) Veröffentlichungstag der Anmeldung: 18.11.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: NASTKE, Rudolf, D-14558 Bergholz-Rehbrücke (DE); RAFLER, Gerald, D-14473 Potsdam (DE)
(86) Internationale Anmeldenummer: DE9602422
(87) Internationale Veröffentlichungsnummer: WO9727939

(56) Entgegenhaltungen:
- EP-A- 0 539 025
- WO-A-96/03041

## Beschreibung

Die Erfindung betrifft Mikropartikel mit aktiven Wirkstoffen, die in einer Matrix einer wachsartigen Substanz gebunden und mit einer polymeren Hüllmembran überzogen sind. Die Erfindung betrifft auch ein Verfahren zu ihrer Herstellung, ihre Verwendung zur Präparation von Pflanzenschutzmitteln für die Land- und Forstwirtschaft, Hygieneprodukten und Produkten der Nahrungs-, Verpackungs-, Bau- und Kosmetikindustrie sowie wäßrige Spritzbrühen, Suspensionen oder andere übliche Zubereitungen, enthaltend diese erfindungsgemäßen Mikropartikel.

Die Mikroenkapsulierung von Wirkstoffen in polymeren Materialien ist bekannt und kann nach verschiedenen Verfahren, wie z.B. in der "Excyclopedia of Polymer Science", J. Wiley Sons, 1968, Vol. 8, beschrieben, mit verschiedenen Polymeren durchgeführt werden.

Einige beispielhafte Methoden für Enkapsulierungen sind: Koazervation, Grenzflächenpolymerisation oder -polykondensation an Flüssig/flüssig-Grenzen oder zum Beispiel an einer festen Phasengrenze. Neben diesen chemischen Verfahren kommen noch physikalische Verfahren in Betracht, wie z.B. die Mikroenkapsulierung von Aerosolen. Als polymere Umhüllungsmaterialien für Mikropartikel, die beispielsweise Agrochemikalien enthalten, werden häufig Aminopräkondensate verwendet. Zum Beispiel wird in Acta Polymerica 40, 1989, 4 S.243-251, eine Übersicht über das breite Einsatzgebiet dieser Präkondensate bei der Mikroverkapselung gegeben.

An die Freisetzungseigenschaften von insbesondere aktiven, speziell leicht flüchtigen Wirkstoffen werden besondere Anforderungen gestellt. Ein wichtiges Kriterium für eine angestrebte Langzeitwirkung, wie dies besonders bei Repellenzien (Ablenkstoffen) gewünscht wird, ist die gleichmäßige Wirkstoffabgabe über einen langen Zeitraum.

In Acta Polymerica 40, 1989, 5 S.325-331, werden Herstellung und Eigenschaften von Mikropartikeln beschrieben, die mit selbstvernetzenden Aminoharz-Präkondensaten hergestellt wurden.

In der EP-A-0 379 379 wird eine Stoffzusammensetzung beansprucht, bei deren Herstellung die Mikropartikel mittels Coazervation mindestens zweier wasserlöslicher Polymere hergestellt werden.

Ein Nachteil literaturbekannter Verfahren zur Retardierung von insbesondere leicht flüchtigen Werkstoffen unterschiedlicher Provenienz und Einsatzgebiete ist deren in der Regel zu schnelle, teilweise unkontrollierte Freisetzung mit anfänglich sehr hohen Freisetzungsraten, Hier schaffen auch "multi-coating"-Systeme keine ausreichende Abhilfe.

Nachteilig ist bei dieser relativ schnellen Freisetzung der Wirkstoffe auch eine hohe unerwünschte Witterungsunabhängigkeit, wobei die Freisetzungsrate nahezu ausschließlich durch den Dampfdruck innerhalb der Partikel und die Durchlässigkeit der Hüllmembran bestimmt wird, d.h. die Partikel geben z.B. auch dann den Wirkstoff noch ab, wenn die Umgebungstemperatur niedrig ist und beispielsweise bei vielen Insekten keine Aktivität zu beobachten ist.

In der EP-A-0 539 025 wird ein rein physikalisches Verfahren der Sprühtrocknung und des Sprüh-Coatings beschrieben. Bei diesem Verfahren wird so vorgegangen, daß wasserlösliche Polymere in der wäßrigen Phase gelöst werden, und dann wird nach Dispergierung des Wirkstoffes das Lösungsmittel auf physikalischem Wege entzogen.

Beim Verfahren nach der WO-A-96 03 04 erfolgt durch den wesentlich geringen Wachsanteil aufgrund von Hydrophob/Hydrophob-Wechselwirkungen eine Trennung von Wirkstoff und Wachs in der Abkühltphase, wobei sich das Wachs an der Innenwand der Mikrokapsel niederschlägt und hier einen hydrophoben Film bildet, der ausschließlich die Diffusion des Wirkstoffes durch die Kapselwand bzw. das Eindringen wäßriger Phasen von außen beeinflußt.

Aufgabe der vorliegenden Erfindung ist es daher, Mikropartikel und ein Verfahren zu deren Herstellung anzugeben, die eine kontrolllierte Freisetzung des Wirkstoffes ermöglicht, insbesondere bei längerfristiger Anwendung.

Die Erfindung wird in bezug auf die Mikropartikel durch die kennzeichnenden Merkmale des Anspruches 1 und hinsichtlich des Verfahrens durch die Merkmale des Anspruches 13 gelöst. Erfindungsgemäße Verwendungen sind durch die Merkmale der Ansprüche 18 und 20 gekennzeichnet. Die Unteransprüche zeigen vorteilhafte Weiterbildungen auf.

Es wurde gefunden, daß sich die Nachteile mangelnder Langzeitwirkung und unkontrollierter Freisetzung vornehmlich leichtflüchtiger Wirkstoffe wesentlich verbessern lassen, wenn die Mikropartikel in ihrem Kern den Wirkstoff, eingebettet in einer Matrix eines wachsartigen Materials, enthalten. Die Matrix steuert zum einen die Diffusion des Wirkstoffes bei Temperaturen unterhalb des Schmelzebereiches und gestattet zum anderen auch die Einstellung eines Temperaturgradienten durch den Einsatz wachsartiger Materialien mit definierten Schmelzebereichen, dem jeweiligen Applikationsfall entsprechend. Werden beispielsweise zur Bekämpfung des Borkenkäfers bzw. zur Vermeidung des Befalls von Holzpoldern durch ihn u.ä. Terpenderivate in mikroverkapselter Form als Repellenzien eingesetzt, so ist die Wirksamkeit bereits nach 2 bis 5 Tagen je nach Wetterlage abgeklungen. Die zu schützenden Objekte müssen des öfteren und in hoher Dosierung besprüht werden, um einen sicheren Schutz zu gewährleisten. Dabei muß weiterhin noch berücksichtigt werden, daß die Insekten erst bei einer Temperatur über 20 bis 25 °C aktiv werden. Bei diesen Temperaturen besteht bereits eine enorme Flüchtigkeit der Terpenderivate. Löst man nach dem erfindungsgemäßen Verfahren allerdings die Terpenderivate z.B. in einem Paraffin/Paraffinwachs-Gemisch mit einem Schmelzebereich von 25 bis 30 °C und dispergiert diese Lösung in Wasser, das ein hüllbildendes Polymer oder Oligomer enthält, welches an den Grenzphasen sich niederschlägt oder vernetzt und so eine Wand um den unter den Präparationsbedingungen flüssigen Kern bildet, so daß eine Suspension feinteiliger Mikroartikel entsteht, die nach Separation und Trocknung in eine Pulverformulierung überführt oder als Suspension direkt für eine spezielle Anwendung formuliert werden kann, und trägt man derartige Formulierungen dann auf die zu schützenden Objekte in geeigneter Weise auf, beobachtet man eine wesentlich moderatere Freisetzung, die erst bei höheren Temperaturen beschleunigt wird. Steigen nämlich die Umgebungstemperaturen auf Werte im Bereich des Schmelzpunktes der wachsartigen Substanz, entstehen im Partikelinneren homogene flüssige Lösungen des Wirkstoffes, in diesem Fall des Terpenderivates, die eine wesentlich beschleunigte Liberation des Wirkstoffes zur Folge haben. Dieser Prozeß ist reversibel, d.h. bei Temperatur-Erniedrigung verfestigt sich der Partikelinhalt wieder, die Freisetzung wird verzögert. Auf diese Weise lassen sich beispielsweise Tages- und Wetterrythmen einstellen: kaltes Wetter, kühle Abende, Nächte und Morgenstunden - es findet nur eine beschränkte Freisetzung statt. Mit steigender Temperatur und steigender Aktivität der Insekten erfolgt auch eine gesteigerte Freisetzung des Ablenkstoffes. Durch wahlweise Einstellung des Schmelzpunktes lassen sich Wirkstoffsysteme gezielt herstellen, z.B. für bestimmte Insektenarten in der Land- und Forstwirtschaft und Hygiene, für den Nahrungsgüterbereich, die Verpackungsindustrie und Vorratshaltung sowie den Bausektor.

Im gleichen Sinne kann eine temperaturinduzierte Freisetzung von Duftstoffen und Parfümölen, Lockstoffen (Pheromonen) und anderen Wirkstoffen durch das erfindungsgemäße Verfahren realisiert werden.

Ein Gegenstand der Erfindung sind daher Mikropartikel vom Kern-Schale-Typ, bestehend aus einem Wirkstoff, gelöst in einer Wachsmatrix als Kernmaterial, bei denen ein hydrophobes wachsartiges Material eine Matrix bildet, in der der Wirkstoff bevorzugt homogen gelöst ist, diese Lösung in flüssiger oder fester Form den Kern der Mikropartikel bildet, der dann von einer wasserunlöslichen polymeren Kapselwand umhüllt ist.

Die in der Regel meist sphärischen Mikropartikel weisen bevorzugt einen mittleren Durchmesser von 0,5 bis 100 µm auf, besonders bevorzugt beträgt der mittlere Durchmesser 0,5 bis 50 µm, ganz besonders bevorzugt 1 bis 10 µm.

Das polymere Wandmaterial weist bevorzugt 3 bis 40 % des Gesamtgewichtes der Mikropartikel auf, wobei Wanddicken von 20 bis 500 nm erreicht werden.

Das polymere Wandmaterial kann aus einem Polyacrylsäureester, Polyurethan, Polyester oder Aminoplast gebildet sein.

Bevorzugt handelt es sich um ein Aminoplast-Präkondensat, insbesondere um Präkondensate auf der Basis von Melamin-Formaldehyd, ganz oder teilweise verätherten Melamin-Formaldehyd-Reaktionsprodukten, Harnstoff-Formaldehyd oder Harnstoff-GlutardialdehydProdukten oder deren Mischkompositionen sowie Reaktionsprodukten auf der Basis von Acrylamid oder Benzoguanamin mit Aldehyden.

Die molaren Verhältnisse Melamin zu Formaldehyd können 1:3,5 bis 1:8, bevorzugt 1:4 bis 1:6 betragen. Der Verätherungsgrad dieser Harze kann durch das molare Verhältnis von Melamin zu Methanol eingestellt werden und liegt z.B. bei 1:10 bis 1:20, bevorzugt bei 1:15 bis 1:18.

Die molaren Verhältnisse von Harnstoff zu Formaldehyd können 1:2,5 bis 1:3,5, bevorzugt 1:2,7 bis 1:3,2 betragen.

Wird anstelle von Formaldehyd Glutardialdehyd verwendet, so können die molaren Verhältnisse 1:1,5 bis 1:2,5 bevorzugt 1:1,8 bis 1:2,2.

Für die Bildung von Mikropartikeln geeignete Aminoharze finden sich z.B. in Kirk Othmer, "Encyclopedia of Chemical Technology", 3. Ausg., Bd. 2, S.440-469.

Bevorzugt ist als Wirkstoff ein Ablenkstoff (Repellent), ein Lockstoff (Attraktiv), ein Pestizid, ein Duftstoff oder ein Wildverbißmittel. Beispiele für derartige Wirkstoffe sind Terpenderivate (Verbenol, Limonen u.a.) ätherische Öle und Parfümöle, Pyrethroide, Pheromone, Fruchtester, Phosphorsäureester u.a.

Als hydrophobes Wachs kann ein Naturwachs, modifiziertes Naturwachs, teilsynthetisches oder vollsythetisches Wachs eingesetzt werden. Bevorzugt handelt es sich um ein Pflanzenwachs, tierisches Wachs, Montanwachs, Paraffinwachs oder Amidwachs.

Besonders bevorzugt handelt es sich um ein makro- oder mikrokristallines Paraffinwachs oder ein Polyethylenwachs.

Das Wachs weist bevorzugt einen Schmelzpunkt zwischen 30° und 90°C auf. Der Schmelzpunkt kann durch definierte Zugabe von flüssigem Paraffin noch weiter gesenkt werden.

In einer bevorzugten Zusammensetzung liegt das Wachs vor in einer Menge von 10 bis 80 %, besonders bevorzugt von 15 bis 50 %, bezogen auf den Wirkstoff bzw. das Wirkstoffgemisch im Kernmaterial.

Ein weiterer Gegenstand der Erfindung ist ein Verfahren zur Enkapsulierung von Wirkstoffen in Form von im wesentlichen sphärischen Mikropartikeln, umfassend die Verfahrensschritte
a) Herstellung einer wäßrigen Präpolymer-Lösung von grenzflächenaktiven Stoffen, Katalysatoren, Monomeren, Präpolymeren oder Polymeren, die zur Bildung einer Kapselwand geeignet sind,
b) Herstellung einer homogenen Lösung des Wirkstoffes in einer Wachsschmelze,
c) Bildung einer Emulsion oder Dispersion des wasserunlöslichen, im Wachs gelösten Wirkstoffes oder Wirkstoffgemisches in der Lösung a) durch Einbringen derselben unter hoher Scherkraft.

Eine bevorzugte Ausführungsform des Verfahrens ergibt sich, wenn man sowohl den Wirkstoff als auch das Wachs aufschmilzt und die vermischte Coschmelze der Polymerlösung zugibt.

Besonders bevorzugt schmilzt man das Wachs und den Wirkstoff oder das Wirkstoffgemisch zusammen auf und gibt diese Coschmelze bei einer Temperatur zu, die höher ist als die der Präpolymerlösung a).

An die Schmelze muß die Anforderung gestellt werden, daß im Gegensatz zu anderen Anwendungen aktiver Wirkstoff und Wachs bei der jeweiligen Temperatur geschmolzen vorliegen und eine homogene Lösung bilden. Phasentrennungen können während des Abkühlungsprozesses auftreten, müssen jedoch bei erneutem Übergang in den Schmelzezustand verschwinden, so daß im flüssigen Zustand immer eine homogene Lösung vorliegt.

Die wäßrige Lösung kann zusätzlich zu den Monomeren, Präpolymeren oder Polymeren, die die Kapselwand bilden, ein oder mehrere wasserlösliche Monomere, oligomere oder Polymere als Emulgatoren, Dispergatoren oder Schutzkolloide enthalten. In Betracht kommen anionische, kationische oder nichtionische Stoffe. Die in der Formulierungstechnik gebräuchlichen Stoffe sind beispielsweise in folgenden Publikationen beschrieben:
"Mc Cutcheon's Detergents and Emulsifiers Annual", Mc Publishing Corp., Glen Rock, NJ (USA) 1988,
H. Stache "Tensid-Taschenbuch", 2. Aufl., C. Hanser Verlag, München, 1981,
M. and J. Ash "Encyclopedia of Surfactants", Vol. I-III, Chemical Publishing Co., NY, 1980-1981.

Bevorzugt handelt es sich um Polyethylenglykole, Polyethylenglykolmonoalkylether, Polyethylenglykol-Polypropylenglykol-Copolymere, Polyvinylalkohole, Polyvinylpyrolidone und Acrylsäure-Acrylsäureamid-Copolymere.

Verfahren zur Erzeugung hoher Scherkräfte sind an sich bekannt, bevorzugt wird ein Hochgeschwindigkeitsrührer oder ein Umlaufhomogenisator verwendet.

Ein weiterer Gegenstand der Erfindung betrifft die Verwendung der Mikropartikel zur Bekämpfung von Pflanzen-, Lebensmittel- und Hygieneschädlingen oder Tierparasiten u.ä., wobei man erfindungsgemäße Mikropartikel in einer wirksamen Konzentration in Wasser suspendiert und diese Suspension auf die Schädlinge oder ihren Lebensraum appliziert oder geeignete Köder präpariert.

Ebenfalls ist Gegenstand der vorliegenden Erfindung die Verwendung der erfindungsgemäßen Mikropartikel zur Herstellung eines Mittels zur Bekämpfung obengenannter Schädlinge sowie wasserdispergierbare Pulver, wasserdispergierbare Granulate oder wäßrige Spritzbrühen, enthaltend diese Mikropartikel.

Die nachfolgenden Beispiele erläutern die Erfindung.

### Beispiele zur Herstellung der Präkondensate

### Beispiel A1: Herstellung eines modifizierten Melamin-FormaldehydPräkondensates

28 g Melamin (0,22 mol) werden unter Rühren in 124 ml 30-Gew.%iger wäßriger Formaldehydlösung eingetragen, das Reaktionsgemisch mit wäßriger 1N-Natronlauge auf pH9 eingestellt und auf 94°C erwärmt: Dabei löst sich das Melamin unter Reaktion mit dem Aldehyd. Danach wird auf 62°C abgekühlt, 120 ml Methanol (3,75 mol) und 7 ml 15-Gew.%ige wäßrige Salzsäure zugegeben und bei 62°C die Reaktion während 30 Minuten durchgeführt. Es werden 2,8 g Triethanolamin zugesetzt und unter Vakuum das azeotrope Methanol-Wasser-Gemisch abdestilliert. Man stellt auf einen Feststoffgehalt von ca. 40 bis 60 Gew.% ein. Anschließend wird die Lösung mit 6 g Harnstoff versetzt und auf Raumtemperatur abgekühlt.

### Beispiel A2: Herstellung eines Harnstoff-Glutaraldehyd-Präkondensates

60 g Harnstoff (1 mol) werden unter Rühren in 800 g 25-Gew.%iger wäßriger Glutardialdehydlösung (2 mol) gelöst. Nach Einstellung des pH-Wertes mit 1N wäßriger Natronlauge auf pH7 bis pH8 wird die Lösung auf eine Temperatur von 70°C erwärmt und 40 Minuten bei dieser Temperatur gerührt. Anschließend wird auf Raumtemperatur abgekühlt.

### Beispiel zur Herstellung der Mikropartikel

### Beispiel B1:

In einem temperierbaren Gefäß werden 60 ml Wasser und 3 g des nach Beispiel A1 hergestellten Präkondensates sowie 0,15 ml Polyäthylenglykol (Molekulargewicht 300) vorgelegt, das Reaktionsgemisch auf 70°C erwärmt und anschließend mit 2,1 ml einer 2N wäßrigen Zitronensäurelösung versetzt. 6,3 g S(-)-Limonen und 6,3 g Paraffinwachs (Schmelzpunkt 53°C) werden gemeinsam aufgeschmolzen und homogenisiert. Die Schmelze wird rasch unter Rühren (Ultraturrax, 12000 RPM) in das Reaktionsgemisch eingetragen und 10 Minuten bei dieser Geschwindigkeit gerührt. Anschließend wird mit einem Propellerrührer bei 500 RPM 120 Minuten bei 60°C weitergerührt. Nach dem Abkühlen erhält man eine Suspension feinteiliger sphärischer Partikel mit Teilchendurchmessern von 1 bis 10 µm. Die Suspension kann für eine Formulierung direkt weiter verwendet werden, oder die Partikel können zu einem fließfähigen Pulver getrocknet werden. Elektronenmikroskopische Aufnahmen zeigen, daß ein homogener Wachskern vorhanden ist, der von einer 30-nm-Wand aus Aminoplast umgeben ist.

### Beispiel B2:

Es wird wie im Beispiel B1 verfahren. Als Wirkstoff-Wachs-Gemisch werden 6,3 g Verbenon und 6,3 g Paraffinwachs gemeinsam aufgeschmolzen und homogenisiert. Die Weiterverarbeitung erfolgt ebenfalls nach Beispiel B1.

### Beispiel B3:

Es wird wie im Beispiel B1 verfahren. Als Wirkstoff-Wachs-Gemisch werden 9 g Verbenon und 3 g Paraffinwachs (Schmelzpunkt 35 bis 40°C) gemeinsam aufgeschmolzen und homogenisiert. Die Weiterverarbeitung erfolgt ebenfalls nach Beispiel B1.

### Beispiel B4:

Es wird wie im Beispiel B1 verfahren. Als Wirkstoff-Wachs-Gemisch werden 6,3 g Kiefernöl und 6,3 g Paraffinwachs gemeinsam aufgeschmolzen und homogenisiert. Die Weiterverarbeitung erfolgt ebenfalls nach Beispiel B1.

### Beispiel B5:

Es wird wie im Beispiel B1 verfahren. Als Wirkstoff-Wachs-Gemisch werden 10 g Parfümöl und 3 g Paraffinwachs gemeinsam aufgeschmolzen und homogenisiert. Die Weiterverarbeitung erfolgt ebenfalls nach Beispiel B1.

### Vergleichsbeispiel:

Es wird wie im Beispiel B1 verfahren. Anstelle des Limonen-Paraffinwachs-Gemisches werden 12 g S(-)-Limonen ohne Wachszusatz eingesetzt. Die Verarbeitung erfolgt nach Beispiel B1.

## Patentansprüche

1. Mikropartikel vom Kern-Schale-Typ, bestehend aus einem Kern, der den Wirkstoff enthält und einem polymeren Kapselwandmaterial, das die Schale bildet;
**dadurch gekennzeichnet,**
daß der Wirkstoff in einem bei Raumtemperatur wachsartigen Material unter Bildung einer wirkstoffenthaltenden Wachsmatrix enthalten ist, mit der Maßgabe, daß Wirkstoff und wachsartiges Material zumindest im Schmelzzustand als homogene Lösung vorliegen, welche den Kern bildet und daß der Kern von einer wasserunlöslichen polymeren Kapselwand ganz oder teilweise umhüllt ist.

2. Mikropartikel nach Anspruch 1,
dadurch gekennzeichnet, daß der Wirkstoff gelöst und homogen in der Wachsmatrix enthalten ist.

3. Mikropartikel nach Anspruch 1 oder 2,
dadurch gekennzeichnet, daß der Anteil des wachsartigen Materials, bezogen auf den Wirkstoff, 10 bis 99 % beträgt.

4. Mikropartikel nach mindestens einem der Ansprüche 1 bis 3,
dadurch gekennzeichnet, daß die Mikropartikel sphärisch sind und einen mittleren Durchmesser von 0,5 bis 500 µm aufweisen.

5. Mikropartikel nach Anspruch 4,
dadurch gekennzeichnet, daß die sphärischen Mikropartikel einen mittleren Durchmesser von 0,5 bis 100 µm aufweisen.

6. Mikropartikel nach mindestens einem der Ansprüche 1 bis 5,
dadurch gekennzeichnet, daß das polymere Wandmaterial 3 bis 40 % des Gesamtgewichtes der Mikropartikel beträgt.

7. Mikropartikel nach mindestens einem der Ansprüche 1 bis 5,
dadurch gekennzeichnet, daß das polymere Wandmaterial ausgewählt ist aus Amino-, Polyacrylsäureester-, Polyurethan- oder Polyesterharzen.

8. Mikropartikel nach Anspruch 7,
dadurch gekennzeichnet, daß das Polymer ein Aminokondensationsharz ist.

9. Mikropartikel nach Anspruch 8,
dadurch gekennzeichnet, daß das Polymer ein Melamin-Formaldehyd-, ein ganz oder teilweise veräthertes Melamin-Formaldehyd-, ein HarnstoffFormaldehyd-, ein Melamin-Harnstoff-Formaldehyd, Harnstoff-Glyoxal- oder Amid-GlutardialdehydKondensationsprodukt ist.

10. Mikropartikel nach mindestens einem der Ansprüche 1 bis 9,
dadurch gekennzeichnet, daß der Wirkstoff ausgewählt ist aus Pestiziden, Insektiziden, Repellenzien, Wildverbißmitteln, Duftstoffen, Lockstoffen oder deren Mischungen.

11. Mikropartikel nach mindestens einem der Ansprüche 1 bis 10,
dadurch gekennzeichnet, daß das wachsartige Material ein Naturwachs, ein modifiziertes Naturwachs oder ein teilsynthetisches oder vollsynthetisches Wachs ist.

12. Mikropartikel nach Anspruch 11,
dadurch gekennzeichnet, daß das Wachs ein Paraffinwachs ist.

13. Verfahren zur Herstellung der Mikropartikel nach mindestens einem der Ansprüche 1 bis 12,
dadurch **gekennzeichnet,**
daß man
a) eine wäßrige präpolymerenthaltende Lösung des Wandmaterials herstellt,
b) der Wirkstoff und das wachsartige Material aufschmilzt unter Bildung einer homogenen Schmelze,
c) die Schmelze nach Verfahrensschritt b) der Präpolymerlösung, die auf einer Temperatur im Bereich von 20 bis 95 °C gehalten wird, unter Scherung zugibt mit der Maßgabe, daß die Temperatur der Präpolymerlösung oberhalb der Temperatur der Wirkstoff-Wachs-Schmelze liegt.

14. Verfahren nach Anspruch 13,
dadurch gekennzeichnet, daß der Wirkstoff und das hydrophobe Wachs vermischt und dann gemeinsam aufgeschmolzen und der Präpolymerlösung zugegeben werden.

15. Verfahren nach Anspruch 13,
dadurch gekennzeichnet, daß der Wirkstoff und das Wachs getrennt aufgeschmolzen werden und dann die vermischte Coschmelze der Präpolymerlösung zugegeben wird.

16. Verfahren nach mindestens einem der Ansprüche 13 bis 15,
dadurch gekennzeichnet, daß das Präpolymer in der Präpolymerlösung in einer Konzentration von 3 bis 50 g pro 100 g Wasser vorliegt.

17. Verfahren nach mindestens einem der Ansprüche 13 bis 16,
dadurch gekennzeichnet, daß die Scherkraft (Verfahrensschritt c) durch einen Hochgeschwindigkeitsrührer oder Umlaufhomogenisator erzeugt wird.

18. Verwendung der Mikropartikel nach mindestens einem der Ansprüche 1 bis 12 zur Bekämpfung von Pflanzen-, Lebensmittel- und Hygieneschädlingen, Tierparasiten und Unkräutern.

19. Verwendung der Mikropartikel nach Anspruch 18, dadurch gekennzeichnet, daß man eine wirksame Konzentration in Wasser suspendiert und die Suspension auf die Schädlinge oder ihren Lebensraum appliziert oder geeignete Köder präpariert.

20. Verwendung der Mikropartikel nach mindestens einem der Ansprüche 1 bis 12 zur Ausbringung von Duftstoffen und ätherischen Ölen.

21. Verwendung der Mikropartikel nach Anspruch 20, in wäßrigen Lösungen, Emulsionen oder Dispersionen oder Lacken und Farben.

## Claims

1. Micro-particles of the core-shell type, consisting of a core which contains the active agent and a polymeric encapsulating wall material, which forms the shell;
characterized in that the active agent is contained in a material which is waxy at room temperature, with formation of a wax matrix containing active agent, with the proviso that the active agent and waxy material are present at least in the melted state as a homogenous solution, which forms the core, and in that the core is completely or partially coated by a polymeric encapsulating wall which is insoluble in water.

2. Micro-particles according to claim 1, characterized in that the active agent is contained dissolved and homogenous in the wax matrix.

3. Micro-particles according to claim 1 or 2, characterized in that the proportion of the waxy material amounts to 10 to 99%, referred to the active agent.

4. Micro-particles according to at least one of claims 1 to 3, characterized in that the micro-particles are spherical and have a mean diameter of 0.5 to 500 µm.

5. Micro-particles according to claim 4, characterized in that the spherical micro-particles have a mean diameter of 0.5 to 100 µm.

6. Micro-particles according to at least one of claims 1 to 5, characterized in that the polymeric wall material amounts to 3 to 40% of the total weight of the micro-particles.

7. Micro-particles according to at least one of claims 1 to 5, characterized in that the polymeric wall material is selected from amino, polyacrylic acid ester, polyurethane and polyester resins.

8. Micro-particles according to claim 7, characterized in that the polymer is an amino condensation resin.

9. Micro-particles according to claim 8, characterized in that the polymer is a melamine-formaldehyde, a wholly or partially etherified melamine-formaldehyde, a urea-formaldehyde, a melamine-urea-formaldehyde, a urea-glyoxal or amide-glutardialdehyde condensation product.

10. Micro-particles according to at least one of claims 1 to 9, characterized in that the active agent is selected from pesticides, insecticides, repellants, means for nibbling gave, perfumed substances, decoy substances and their mixtures.

11. Micro-particles according to at least one of claims 1 to 10, characterized in that the waxy material is natural wax, a modified natural wax or a partially synthetic or wholly synthetic wax.

12. Micro-particles according to claim 11, characterized in that the wax is a paraffin wax.

13. A method of manufacturing the micro-particles according to at least one of claims 1 to 12, characterized in that:
a) an aqueous solution of the wall material containing pre-polymer is prepared,
b) the active agent and the waxy material are melted to form a homogenous melt,
c) the melt according to method step b) is added with shearing to the pre-polymer solution, which is held at a temperature in the range from 20 to 95° C, with the proviso that the temperature of the pre-polymer solution lies above the temperature of the active agent and wax melt.

14. A method according to claim 13, characterized in that the active agent and the hydrophobic wax are mixed and then melted together and added to the pre-polymer solution.

15. A method according to claim 13, characterized in that the active agent and the wax are melted separately and then the mixed co-melt is added to the pre-polymer solution.

16. A method according to at least one of claims 13 to 15, characterized in that the pre-polymer in the pre-polymer solution is present in a concentration from 3 to 50 g per 100 g water.

17. A method according to at least one of claims 13 to 16, characterized in that the shearing force (method step c) is created by a high speed stirrer or rotary homogeniser.

18. Use of the micro-particles according to at least one of claims 1 to 12 for combatting pests affecting plants, foodstuffs and hygiene, animal parasites and weeds.

19. Use of the micro-particles according to claim 18, characterized in that an effective concentration is suspended in water and is applied to the pests or their habitat or a suitable bait is prepared.

20. Use of the micro-particles according to at least one of claims 1 to 12 for applying perfumed substances and essential oils.

21. Use of the micro-particles according to claim 20, in aqueous solutions, emulsions or dispersions or lacquers and paints.

## Revendications

1. Microparticule de type noyau/enveloppe, constituée d'un noyau qui contient la substance active et d'un matériau paroi de capsule polymère qui forme l'enveloppe ;
caractérisée en ce que
la substance active est contenue dans un matériau cireux à la température ambiante avec formation d'une matrice cireuse contenant la substance active, sous réserve que la substance active et le matériau cireux se présentent au moins à l'état fondu en solution homogène qui forme le noyau, et en ce que le noyau est entièrement ou partiellement enrobé par une paroi de capsule polymère insoluble dans l'eau.

2. Microparticule selon la revendication 1,
caractérisée en ce que
la substance active est contenue de manière dissoute et homogène dans la matrice de cire.

3. Microparticule selon la revendication 1 ou 2,
caractérisée en ce que
la proportion du matériau cireux, par rapport à la substance active, est de 10 à 99 %.

4. Microparticule selon au moins l'une des revendications 1 à 3,
caractérisée en ce que
les microparticules sont sphériques et présentent un diamètre moyen de 0,5 a 500 µm.

5. Microparticule selon la revnedication 4,
caractérisée en ce que
les microparticules sphériques présentent un diamètre moyen de 0,5 à 100 µm.

6. Microparticule selon au moins l'une des revendications 1 à 5,
caractérisée en ce que
le matériau de paroi polymère représente de 3 à 40 % du poids total des microparticules.

7. Microparticule selon au moins l'une des revendications 1 à 5,
caractérisée en ce que
le matériau de paroi polymère est choisi parmi les résines amino, les résines esters d'acide polyacrylique, les résines polyuréthanes ou les résines polyesters.

8. Microparticule selon la revendication 7,
caractérisée en ce que
le polymère est une résine de condensation amino.

9. Microparticule selon la revendication 8,
caractérisée en ce que
le polymère est un produit de condensation mélamine-formaldéhyde, mélamine-formaldéhyde entièrement ou partiellement éthérifié, urée-formaldéhyde, mélamine-urée-formaldéhyde, urée-glycoxal- ou amide-glutardialdéhyde.

10. Microparticule selon au moins l'une des revendications 1 à 9,
caractérisée en ce que
la substance active est choisie parmi les pesticides, les insecticides, les répulsifs, les agents permettant d'éviter les morsures faites par les animaux sauvages, les parfums, les produits attractifs ou leurs mélanges.

11. Microparticule selon au moins l'un des revendications 1 à 10,
caractérisée en ce que
le matériau cireux est une cire naturelle, une cire naturelle modifiée ou une cire partiellement synthétique ou entièrement synthétique.

12. Microparticule selon la revendication 11,
caractérisée en ce que
la cire est une cire de paraffine.

13. Procédé de production de microparticule selon au moins l'une des revendications 1 à 12,
caractérisé en ce que
a) on produit une solution du matériau de paroi contenant un prépolymère aqueux,
b) on fait fondre la substance active et le matériau cireux avec formation d'une masse fondue homogène,
c) on ajoute la masse fondue après l'étape b) du procédé à la solution de prépolymère qui est maintenue à une température comprise entre 20 et 95°C, sous un cisaillement, sous réserve que la température de la solution de prépolymère se situe au-dessus de la température de la masse fondue substance active-cire.

14. Procédé selon la revendication 13,
caractérisé en ce qu'
on mélange la substance active et la cire hydrophobe puis en ce qu'on les fait fondre ensemble et en ce qu'on ajoute la solution de prépolymère.

15. Procédé selon la revendication 13,
caractérisé en ce qu'
on fait fondre séparément la substance active et la cire puis en ce qu'on ajoute la masse co-fondue mixte de la solution de prépolymère.

16. Procédé selon au moins l'une des revendications 13 à 15,
caractérisé en ce que
le prépolymère se présente dans la solution de prépolymère à une concentration de 3 à 50 g pour 100 g d'eau.

17. Procédé selon au moins l'une des revendications 13 à 16,
caractérisé en ce que
la force de cisaillement (étape c) du procédé) est produite par un agitateur à grande vitesse ou un homogénéiseur à rotation.

18. Utilisation des microparticules selon au moins l'une des revendications 1 à 12 pour combattre les parasites des plantes, des aliments et des installations d'hygiène, des parasites des animaux et des mauvaises herbes.

19. Utilisation des microparticules selon la revendication 18,
caractérisée en ce qu'
on met en suspension une concentration dans l'eau et en ce qu'on applique la suspension sur les parasites et leur lieu de vie, ou bien en ce qu'on prépare des appâts appropriés.

20. Utilisation des microparticules selon au moins une des revendications 1 à 12 pour la production de parfums et d'huiles éthérées.

21. Utilisation des microparticules selon la revendication 20 dans des solutions, émulsions ou dispersions aqueuses ou des laques et colorants.
